# EUROPÄISCHE PATENTANMELDUNG

(11) **EP 0 630 977 A1**
(43) Veröffentlichungstag der Anmeldung: **28.12.1994**
(21) Anmeldenummer: 94890104.6
(22) Anmeldetag: 15.06.1994
(51) Int. Cl.: C21C 5/42

(54) **Konverter zur Herstellung von Stahl**

(30) Priorität: 21.06.1993 AT 1213/93
(71) Anmelder: VOEST-ALPINE INDUSTRIEANLAGENBAU GMBH, A-4020 Linz (AT)
(72) Erfinder: Pirklbauer, Wilfried, Dr., A-4491 Niederneukirchen (AT); Grabner, Johann, Dipl.-Ing., A-4040 Linz (AT); Kaspar, Sieghart, Dipl.-Ing., A-4501 Neuhofen (AT)
(74) Vertreter: Kopecky, Helmut

(57) **Zusammenfassung**

Ein Konverter zur Herstellung von Stahl aus festen und/oder flüssigen Einsatzstoffen, wie Roheisen und/oder Schrott und/oder Eisenschwamm weist ein feuerfest ausgekleidetes Frischgefäß (1), eine Sauerstoff oder ein sauerstoffhältiges Gas zuführende Frischeinrichtung (9, 17) und eine Heizeinrichtung auf.

Zur Erzielung höchster Produktivität bei hoher Schrottchargierung und großer Reinheit des Stahles weist die Heizeinrichtung mindestens eine selbstverzehrende Graphit-Elektrode (11) auf und ist die Frischeinrichtung unabhängig von der Heizeinrichtung entweder von einer Sauerstoffblaslanze (9) gebildet oder weist unterhalb des Schmelzenbadspiegels liegende sauerstoffblasende Boden- und/oder Seitendüsen (17) auf (Fig. 1).

## Beschreibung

Die Erfindung betrifft einen Konverter zur Herstellung von Stahl aus festen und/oder flüssigen Einsatzstoffen, wie Roheisen und/oder Schrott und/oder Eisenschwamm, mit einem feuerfest ausgekleideten Frischgefäß, einer Sauerstoff oder ein sauerstoffhältiges Gas zuführenden Frischeinrichtung und einer Heizeinrichtung, sowie ein Verfahren zum Herstellen von Stahl.

Es ist bereits bekannt (AT-B - 232.531), den Einsatzstoffen fehlende Wärme mittels Brenner zuzuführen, um die gewünschte Abstichtemperatur zu erreichen oder gezielt den Schrottsatz zu vergrößern, wobei als Heiz-Frisch-Einrichtung ein Blasrohr mit einem Sauerstoffblasrohr und einem Brennstoffzuführungsrohr vorgesehen ist. Durch das Brennstoffzuführungsrohr wird Öl oder Erdgas, also ein fossiler Brennstoff, in das Frischgas geleitet.

Mit dieser bekannten Einrichtung läßt sich zwar der Schrotteinsatz vergrößern, jedoch erhöht sich mit dem Schrottanteil die benötigte Chargendauer, da sich die Flamme erst durch den oberhalb des flüssigen Roheisens vorhandenen eingesetzten Schrott durcharbeiten muß. Der zugeführte Sauerstoff zündet erst, wenn die Flamme genügend Schrott bis zum Roheisenbadspiegel aufgeschmolzen hat, was relativ lange dauert.

Aus der AT-B - 372.110 ist ein Konverter zur Herstellung von Stahl aus festen und flüssigen Einsatzstoffen, wie Roheisen und Schrott, mit einer Heiz-Frisch-Einrichtung bekannt, wobei die Heiz-Frisch-Einrichtung von einem Plasmabrenner und einem den Plasmabrenner umgebenden Mantel zur Zuführung von Sauerstoff sowie einem diesen Mantel umgebenden Kühlmantel gebildet ist. Ein Konverter mit einem zum Zweck des Schrotteinschmelzens vorgesehenen Plasmabrenner ist weiters aus der US-A - 3,316,082 bekannt, wobei eine zentrale Sauerstoff-Gas-Einleitung vorgesehen ist. Ein Ofen mit einem wassergekühlten Wolframbrenner und einer Sauerstoffzuführung ist weiters aus der US-A - 3,556,771 bekannt.

Mit diesen bekannten Plasma-Heizeinrichtungen bzw. Wolframelektroden läßt sich zwar ein zusätzlicher Energieeintrag verwirklichen; es kommt jedoch infolge der Wasserkühlung der Plasmakathoden zu häufigen Leckagen, woraus untragbare Produktivitätsverluste und hohe Instandhaltungskosten resultieren. Das Problem der auftretenden Leckagen verstärkt sich in besonderem Maß, wenn gleichzeitig mit der Inbetriebnahme des Plasmabrenners ein Sauerstoffblasen durchgeführt wird. Ein weiteres Problem bei solchen Brennern liegt darin, daß die zugeführte Energiemenge nach oben limitiert ist, da die Wasserkühlung einen Großteil der Wärmeenergie wieder abführt.

Aus der EP-A - 2 257 450 ist ein Elektro-Lichtbogenofen bekannt, bei dem zum Zweck der Energieeinsparung ein Einsatz kohlenstoffhältiger Brennstoffe und sauerstoffhaltiger Gase vorgesehen ist. Der Sauerstoff wird durch im oberen Ofenbereich stationär angeordnete Blasvorrichtungen schräg nach unten in den Ofen geleitet. Die dabei entstehende Gasströmung saugt die Reaktionsgase an, die aus dem Schrott und der sich bildenden Schmelze stammen, und verbrennt sie. Bei diesem Elektro-Lichtbogenofen ist mit steigendem Schrotteinsatz ein ebenso steigender Kohleeinsatz erforderlich. Hier wird also - ähnlich wie gemäß der AT-B - 232.531 - elektrische Energie durch fossile Energie ersetzt, um auf höhere Produktionsleistungen zu kommen. Dies bedingt metallurgische Nachteile, wie einen erhöhten N-, H- und S-Gehalt. Ein weiterer Nachteil ist darin zu sehen, daß die Chargendauer (tap to tap-Zeit) bei Elektro-Lichtbogenöfen infolge der gänzlich anderen Schmelzführungstechnologie (Flachbad) im Vergleich zur Konvertertechnologie sehr lange ist.

Aus der AT-B - 376.702 ist ein metallurgisches Gefäß bekannt, durch dessen Decke mehrere Hohlelektroden geführt sind, in deren Hohlraum ein Gaszuführungsrohr heb- und senkbar geführt ist. Dieses Gefäß kann wahlweise zwecks metallurgischer Behandlung verschiedenster Stahlqualitäten
a) durch Zurückziehen der Rohrmündung hinter die Mündung der Hohlelektrode als Lichtbogenofen zum Einschmelzen von Einsatz- bzw. Zuschlagstoffen,
b) durch Verschieben der Mündung des Rohres bis zur oder geringfügig vor die Mündung der Hohlelektrode und gleichzeitiges Zuführen eines plasmaerzeugenden Gases als Plasmaofen zum Schmelzen von Einsatz- oder Zuschlagstoffen unter erhöhter Energieeintragung, oder
c) durch Verschieben der Mündung des Rohres über die Mündung der Hohlelektrode hinaus, gegebenenfalls bis zum Eintauchen in ein Bad der niedergeschmolzenen Einsatzstoffe und Zuführ von sauerstoffhältigem Gas bei unterbrochener Stromzufuhr als Frischkonverter

betrieben werden.

Auch hierbei muß dem eingesetzten Schrott, da ein Einbringen von elektrischer Energie während des Blasvorganges nicht möglich ist, wesentlich mehr Kohlenstoff als beim üblichen Einschmelzen zugesetzt werden, wodurch sich ebenfalls die oben beschriebenen Nachteile einstellen.

Zudem erfordert die Kombination einer Elektrode mit einem in ihr beweglichen Gaszuführungsrohr einen hohen mechanischen Aufwand. Es ist zu befürchten, daß die Beweglichkeit des Gaszuführungsrohres gegenüber der Elektrode, insbesondere die feine, stetige Nachjustierung des Gaszuführungsrohres, infolge der enormen Hitzeeinwirkung des Plasmagases und der Verschmutzungsgefahr nicht aufrecht erhalten werden kann.

Die Erfindung bezweckt die Vermeidung der oben dargelegten Nachteile und Schwierigkeiten und stellt sich die Aufgabe, einen Konverter der eingangs beschriebenen Art sowie ein Verfahren zur Herstellung von Stahl zu schaffen, welche eine höchstmögliche Produktivität, d.h. kürzeste Chargenzeiten, ermöglichen, wobei wahlweise Schrott alleine oder zusätzlich zu chargiertem Roheisen oder aber auch Roheisen alleine (gegebenenfalls unter Einsatz eines Kühlmittels, wie z.B. Erz, Kalkstein) verarbeitet werden kann. Insbesondere kommt es auf höchste Frischgeschwindigkeiten bei der Stahlherstellung unter Beibehaltung der beim Sauerstoff-Blaskonverter erzielbaren qualitativen Vorteile, wie niedriger N-, H- und niedriger S-Gehalt des Stahles, an.

Diese Aufgabe wird erfindungsgemäß dadurch gelöst, daß die Heizeinrichtung mindestens eine selbstverzehrende Graphit-Elektrode aufweist und die Frischeinrichtung unabhängig von der Heizeinrichtung entweder von einer Sauerstoffblaslanze gebildet ist oder unterhalb des Schmelzenbadspiegels liegende sauerstoffblasende Boden- und/oder Seitendüsen aufweist. Bei in den Konverter eingefahrener Elektrode (bzw. mehreren Elektroden) kann gleichzeitig geschmolzen und gefrischt werden, u.zw. unter größtmöglicher Schonung der Elektroden, also Vermeidung eines übermäßigen Elektrodenverschleißes.

Hierdurch gelingt es, die Vorteile eines schnellblasenden Sauerstoff-Blaskonverters mit den Vorteilen einschmelzstarker Elektro-Lichtbogenöfen zu kombinieren, wobei jedoch der Erfindung die Konvertertechnologie zugrundeliegt, bei der mit elektrischer Lichtbogenbeheizung der Feststoffeinsatz/Roheiseneinsatz unter Erzielung höchster Frischgeschwindigkeiten beliebig variiert werden kann. Die hohe Produktivität des erfindungsgemäßen Konverters ergibt sich dadurch, daß bei hohem Kohlenstoffgehalt des Einsatzes hohe Sauerstoffblasraten angewendet werden können, die bei einem Elektro-Lichtbogenofen infolge der Flachbadführung und der gegenüber einem Konverter gänzlich unterschiedlichen Bauart des Gefäßes nicht verwirklichbar wären.

Der erfindungsgemäße Konverter läßt sich insbesondere in dem Bereich mit besonderem Vorteil verwenden, in dem weder ein Sauerstoff-Blaskonverter noch ein Elektro-Lichtbogenofen effizient arbeiten kann, u.zw. bei einem Einsatzanteil an Roheisen im Bereich von ca. 30 bis 70 %.

Vorteilhaft sind zwei oder mehrere selbstverzehrende Graphit-Elektroden vorgesehen, wobei bei Gleichstrombetrieb zweckmäßig eine der Graphit-Elektroden anodisch und die anderen Graphit-Elektroden kathodisch geschaltet sind.

Zur Erzielung eines gleichmäßigen Elektrodenabbrandes und eines gleichmäßigen Verschleißes der feuerfesten Auskleidung des Konverters sind zweckmäßig die Graphit-Elektroden an einer die anodische gegen eine kathodische Schaltung und umgekehrt wechselnden Umschalteinrichtung angeschlossen.

Gemäß einer vorteilhaften Ausführungsform sind die Elektroden kathodisch geschaltet und sind im Boden des Konverters eine oder mehrere Bodenanoden vorgesehen, wodurch ein sehr hoher Energieeintrag und damit eine besonders verkürzte tap to tap-Zeit möglich ist.

Eine weitere bevorzugte Ausführungsform ist dadurch gekennzeichnet, daß drei Graphit-Elektroden bei Drehstrombetrieb vorgesehen sind.

Zweckmäßig ist der Konverter mit Bodenspüldüsen zur Einleitung eines Spülgases ausgestattet.

Selbstverständlich kann der Konverter mit Zusatzeinrichtungen zum Einbringen von Zuschlägen und/oder fossiler Energie ausgestattet sein, falls dies für die Verfahrensführung von Vorteil ist.

Vorzugsweise sind die Graphit-Elektroden außerhalb der Längsmittelachse des Konverters und auch außerhalb des an den Konvertermund anschließbaren Abgaskamins angeordnet, wodurch sich wesentliche Vorteile bei der Wartung und Instandhaltung der Elektroden bzw. der Elektrodenhalter ergeben, da die Elektroden leicht zugänglich sind.

Ein erfindungsgemäßes Verfahren zum Herstellen von Stahl aus Roheisen und/oder Schrott und/oder Eisenschwamm unter Verwendung eines Konverters ist dadurch gekennzeichnet, daß unter Zugrundelegung der Konvertertechnologie ein Frischen mit Sauerstoff oder einem sauerstoffhältigen Gas und ein Einbringen von elektrisch erzeugter Wärme durch Brennen eines Lichtbogens an mindestens einer selbstverzehrenden Graphit-Elektrode erfolgt.

Ein Verfahren, das insbesondere dann von besonderem Vorteil ist, wenn sperriger Schrott eingeschmolzen werden soll, ist dadurch gekennzeichnet, daß in einem ersten Verfahrensschritt ein Hauptfrischen von Roheisen und gegebenenfalls einer Teilmenge von Schrott und/oder Eisenschwamm durchgeführt wird und anschließend in einem zweiten Verfahrensschritt zusätzlich eingebrachter Schrott und/oder Eisenschwamm geschmolzen und gegebenenfalls gleichzeitig oder in einem dritten Verfahrensschritt gefrischt wird, wobei beim ersten Verfahrensschritt lediglich die Frischeinrichtung aktiv ist und in weiteren Verfahrensschritten sowohl die Frischeinrichtung als auch mindestens eine Graphit-Elektrode aktiviert sind, u.zw. im Falle des Aufblasens von Sauerstoff alternierend und im Falle des Einblasens von Sauerstoff von unterhalb des Schmelzenbadspiegels alternierend oder gleichzeitig.

Soll in erster Linie kleinstückiger Schrott bzw. Eisenschwamm erschmolzen werden, werden zweckmäßig von Anfang an sowohl die Graphit-Elektroden als auch die Frischeinrichtung aktiviert, wobei zum im Konverter bereits vorhandenen Roheisen kontinuierlich und/oder chargenweise Schrott und/oder Eisenschwamm zugegeben werden.

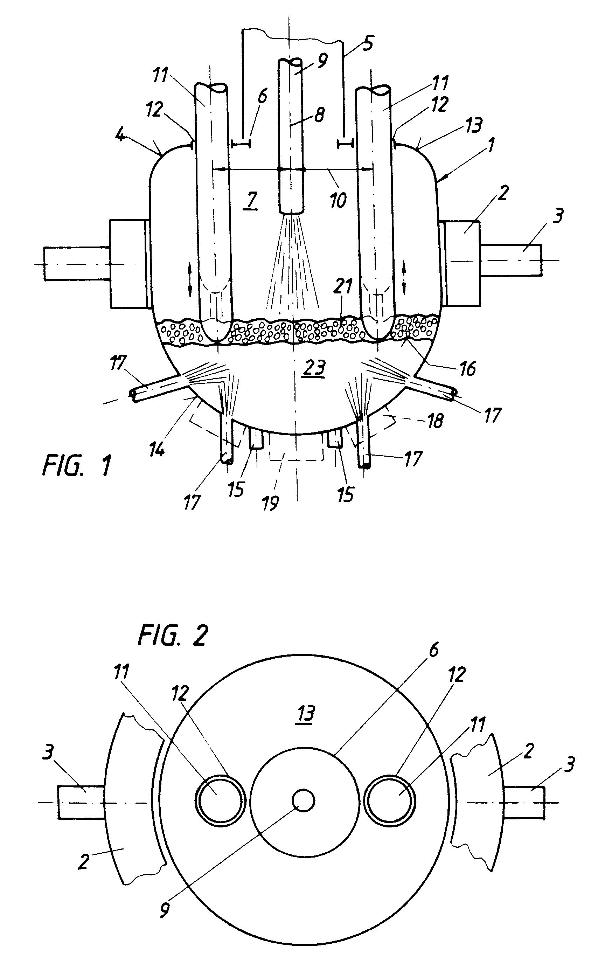

Die Erfindung ist nachfolgend anhand mehrerer Ausführungsbeispiele näher erläutert, wobei Fig. 1 einen erfindungsgemäßen Konverter im Längsschnitt und Fig. 2 eine Draufsicht auf diesen Konverter in schematischer Darstellung veranschaulichen. Fig. 3 zeigt in Draufsicht eine weitere Ausführungsform eines Konverters.

Mit 1 ist ein Frischgefäß eines kippbaren Konverters bezeichnet, der über an einem Tragring 2 angeordnete Drehzapfen 3 in einem Konverterstand kippbar gelagert ist. Das Frischgefäß 1 weist einen metallischen Außenmantel 4 auf, der innenseitig mit einer feuerfesten Auskleidung, die nicht näher dargestellt ist, versehen ist. Ein Abgaskamin 5 ist an den Konvertermund 6 ansetzbar.

In aufrechter Stellung des Konverters ragt zentral in das Innere 7 des Frischgefäßes 1 eine entlang der Längsmittelachse 8 des aufrecht stehenden Konverters heb- und senkbare und von oben durch den Konvertermund 6 in das Innere 7 einbringbare Sauerstoffblaslanze 9. Im seitlichen Abstand 10 von dieser Sauerstoffblaslanze 9 ragen in das Innere 7 des Frischgefäßes 1 zwei selbstverzehrende Graphit-Elektroden 11, die in bezug auf die Längsmittelachse des aufrecht stehenden Konverters einander diametral gegenüberliegend angeordnet sind. Diese Elektroden 11 werden durch eigene Elektrodenöffnungen 12, die im Konverterhut 13 angeordnet sind, eingebracht. Die Elektroden 11 sind, wie in der Zeichnung schematisch dargestellt, heb- und senkbar und können aus dem Frischgefäß 1 zur Gänze nach oben herausgezogen werden. Die Elektroden 11 können gemeinsam, einzeln oder abwechselnd betrieben werden.

Im Boden 14 des Frischgefäßes 1 sind Bodenspüldüsen 15 zur Einleitung von Spülgas vorgesehen. Weiters sind im Boden 14 bzw. in den Seitenwänden noch in einem Niveau unterhalb des üblichen Schmelzenbadspiegels 16 Boden- und Seitendüsen 17, durch die Sauerstoff oder ein sauerstoffhältiges Gas eingeleitet werden kann, vorgesehen.

Sind die Elektroden 11 kathodisch geschaltet, sind im Boden des Frischgefäßes zwei Bodenanoden 18 angeordnet. Anstelle der beiden Bodenanoden 18 könnte auch eine einzige zentrale Bodenanode 19 vorgesehen sein.

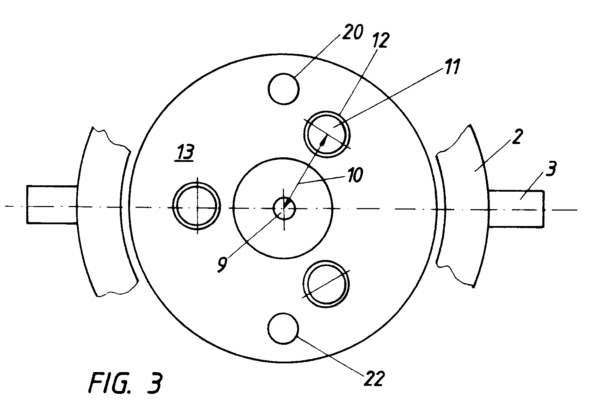

Gemäß der in Fig. 3 dargestellten Ausführungsform sind drei im Abstand 10 von der Blaslanze 9 und parallel zu dieser angeordnete selbstverzehrende Graphit-Elektroden 11 für einen Gleich- oder Drehstrombetrieb vorgesehen. Aus Fig. 3 ist weiters ersichtlich, daß ein eigenes Abstichloch 20 für die Schlacke 21 und ein eigenes Abstichloch 22 für Stahl 23 am Konverterhut 13 angeordnet sind.

Sollte für den Konverterbetrieb das Einbringen von Zuschlägen und/oder fossiler Energie notwendig sein, können hierfür notwendige Zusatzeinrichtungen, wie sie bei Konvertern oftmals vorgesehen sind, eingebaut sein, was jedoch nicht näher dargestellt ist.

Ein erfindungsgemäßer Konverter kann in verschiedener Weise betrieben werden. Beispielsweise kann in einem ersten Verfahrensschritt ohne Einsatz der Elektroden 11 (diese sind dann aus dem Frischgefäß 1 gezogen) ein Hauptfrischen von dem im Konverter bereits eingebrachten Roheisen und einer Teilmenge von Schrott durchgeführt werden. Zusätzlich eingebrachter Schrott wird erst in einem zweiten Verfahrensschritt unter Zuhilfenahme der Elektroden 11 geschmolzen und fertiggefrischt, wobei das Fertigfrischen entweder gleichzeitig mit dem zweiten Verfahrensschritt oder erst anschließend an das Schmelzen in einem dritten Verfahrensschritt durchgeführt wird. Diese Verfahrensweise ist besonders dann von Vorteil, wenn sperriger Schrott zu verarbeiten ist.

Eine weitere Verfahrensweise, die insbesondere beim Einsatz kleinstückigen Schrotts von Vorteil ist, sieht ein Heizen und Frischen gleichzeitig vom Beginn an vor, was bedeutet, daß die Frischeinrichtung 9, 17 und die Elektroden 11 gleichzeitig in Betrieb sind. Schrott und/oder Eisenschwamm können dann kontinuierlich oder chargenweise zugesetzt werden.

Eine Zugabe von Zuschlägen und/oder fossiler Energie sowie das Einleiten von Spülgas sind zu jedem Prozeßzeitpunkt möglich. Weiters kann der erfindungsgemäße Konverter auch in Sumpf-Fahrweise betrieben werden.

Die besonderen Vorteile des erfindungsgemäßen Konverters bzw. des erfindungsgemäßen Verfahrens zu dessen Betrieb liegen in der hohen Flexibilität bei der Gestaltung des metallischen Einsatzes, der von 100 %-Flüssigeinsatz (Roheisen) bis 100 %-Festeinsatz (Schrott bzw. Eisenschwamm) reichen kann. Weiters ist auch höchste Produktivität bei kontinuierlicher Chargierung des Feststoffeinsatzes mit hoher Schüttdichte erzielbar.

Nachfolgend sind die Herstellung von Stahl mit Hilfe eines KMS (Klöckner-Maxhütte-Stahlerzeugungsverfahren)-Konverters und die Herstellung von Stahl mit Hilfe eines erfindungsgemäßen bodenblasenden Konverters verglichen:

Bei beiden Konvertern betrug das Abstichgewicht 140 t, das Ausbringen 89 %, wobei eine Produktionszeit von 6.800 h/Jahr zugrundegelegt wurde. Eingesetzt wurde in beiden Fällen:
- flüssiges Roheisen: zu 53,6 %,
- Schrott: zu 13,6 %,
- festes Roheisen: zu 6,9 % und
- Eisenschwamm: zu 25,9 %.

Beim Einsatz eines KMS-Konverters ergab sich eine tap to tap-Zeit von 55 min und eine Hauptblaszeit von 33 min, was Nebenzeiten von 22 min ergibt. Zusätzlich zu dem oben beschriebenen Einsatz war beim KMS-Konverter ein Kohleeinsatz erforderlich, u.zw. 90 kg Anthrazit/t Stahl, welcher durch Bodendüsen staubförmig in den Konverter eingebracht wurde. Die daraus resultierende Jahresproduktion betrug 1,039 Mio t.

Beim Einsatz des erfindungsgemäßen Konverters wurde in einem ersten Verfahrensschritt ein Hauptfrischen durchgeführt, wobei
84 t flüssiges Roheisen,
21 t Schrott und
11 t festes Roheisen, also zusammen 116 t,
eingesetzt wurden. Zur vollständigen Frischung dieses Einsatzes ergab sich eine theoretische Blaszeit von 13 min mit einer Nebenzeit von 22 min, was einer tap to tap-Zeit von 35 min entspricht. Es wurde jedoch nicht fertiggeblasen, sondern es erfolgte ein Abbruch des Blasens bei ca. 85 % der Blaszeit, also etwa nach 11 min. Der C-Gehalt betrug dann 0,5 %, der FeO-Gehalt weniger als 5 %.

In einem zweiten Verfahrensschritt wurde elektrische Energie eingebracht, u.zw. mit Hilfe der selbstverzehrenden Graphit-Elektroden 11, wobei gleichzeitig 41 t Eisenschwamm einer bestimmten Zusammensetzung kontinuierlich chargiert wurden, u.zw. 3 t/min. Die Elektroden wurden mittels eines 140 MVA-Trafos versorgt, was in etwa einer 100 MW-Leistung entspricht. Die Chargierzeit betrug rund 14 min.

Die Gesamtblaszeit (erster und zweiter Verfahrensschritt gemeinsam) betrug 11 min + 14 min, also 25 min. Dies ergibt zusammen mit der Nebenzeit von 22 min eine tap to tap-Zeit von 47 min. Daraus resultiert eine Jahresproduktion von 1,215 Mio t, was im Vergleich zum oben dargelegten Herstellen von Stahl mit Hilfe des KMS-Konverters eine Produktionssteigerung von 17 % ausmacht.

Vergleicht man andererseits den Einsatz eines erfindungsgemäßen Konverters mit dem Einsatz eines KMS-Konverters unter Zugrundelegung einer mit dem KMS-Konverter erreichten Jahresproduktion von 1,039 Mio t, errechnet sich ein 120 t-Konverter mit 120 MVA-Trafo.

Selbst bei Einsatz eines herkömmlichen LD-Konverters, der mit einer elektrischen Beheizung im Sinne der Erfindung, also mit selbstverzehrenden Graphit-Elektroden 11 ausgestattet ist, ergibt sich ein Vorteil durch eine Mehrproduktion, obwohl nach dem Einbringen des Eisenschwammes eine Nachblaszeit von 3 min erforderlich ist. Dies ergibt eine Gesamtblaszeit von 28 min und somit unter Zugrundelegung einer Nebenzeit von 22 min eine tap to tap-Zeit von 50 min. Hierdurch wird eine Jahresproduktion in der Höhe von 1,142 Mio t möglich, was noch immer eine Steigerung von 10 % gegenüber dem Einsatz eines KMS-Konverters darstellt Hieraus folgt, daß die Ausstattung eines herkömmlichen LD-Konverters mit einer elektrischen Beheizung in Form von selbstverzehrenden Graphit-Elektroden trotz der Investitionskosten hierfür sinnvoll ist.

Zusätzlich zu dem oben dargestellten Vorteil der wesentlich höheren Produktivität des erfindungsgemäßen Konverters bzw. erfindungsgemäßen Verfahrens gegenüber einem KMS-Konverter ergeben sich noch Vorteile, die in einem
· geringeren Abgasvolumen, in einem
· besseren Ausbringen, einem
· geringeren N- und H-Gehalt im Stahl sowie in einem
· geringeren S-Gehalt im Stahl

zu sehen sind. Die Mehrkosten der elektrischen Ausrüstung des erfindungsgemäßen Konverters werden - im Vergleich zum KMS-Konverter bzw. KMS-Verfahren - durch die bei diesem Verfahren erforderliche Einblastechnik weitgehend egalisiert. Die durch den Abbrand der Graphit-Elektroden bedingten Verunreinigungen des Bades mit Kohlenstoff spielen erfindungsgemäß überhaupt keine Rolle, da ein Fertigfrischen mit O₂ erfolgt.

## Patentansprüche

1. Konverter zur Herstellung von Stahl aus festen und/oder flüssigen Einsatzstoffen, wie Roheisen und/oder Schrott und/oder Eisenschwamm, mit einem feuerfest ausgekleideten Frischgefäß (1), einer Sauerstoff oder ein sauerstoffhältiges Gas zuführenden Frischeinrichtung (9, 17) und einer Heizeinrichtung, dadurch gekennzeichnet, daß die Heizeinrichtung mindestens eine selbstverzehrende Graphit-Elektrode (11) aufweist und die Frischeinrichtung unabhängig von der Heizeinrichtung entweder von einer Sauerstoffblaslanze (9) gebildet ist oder unterhalb des Schmelzenbadspiegels liegende sauerstoffblasende Boden- und/oder Seitendüsen (17) aufweist

2. Konverter nach Anspruch 1, dadurch gekennzeichnet, daß zwei oder mehrere selbstverzehrende Graphit-Elektroden (11) vorgesehen sind.

3. Konverter nach Anspruch 2, dadurch gekennzeichnet, daß bei Gleichstrombetrieb eine der Graphit-Elektroden (11) anodisch und die anderen Graphit-Elektroden (11) kathodisch geschaltet sind.

4. Konverter nach Anspruch 3, dadurch gekennzeichnet, daß die Graphit-Elektroden (11) an einer die anodische gegen eine kathodische Schaltung und umgekehrt wechselnden Umschalteinrichtung angeschlossen sind.

5. Konverter nach Anspruch 2, dadurch gekennzeichnet, daß bei Gleichstrombetrieb die Graphit-Elektroden (11) kathodisch geschaltet sind und im Boden des Konverters eine oder mehrere Bodenanoden (18, 19) vorgesehen sind.

6. Konverter nach Anspruch 2, dadurch gekennzeichnet, daß drei Graphit-Elektroden (11) bei Drehstrombetrieb vorgesehen sind (Fig. 3).

7. Konverter nach einem oder mehreren der Ansprüche 1 bis 6, dadurch gekennzeichnet, daß der Konverter weiters Bodenspüldüsen (15) zur Einleitung eines Spülgases aufweist.

8. Konverter nach einem oder mehreren der Ansprüche 1 bis 7, dadurch gekennzeichnet, daß der Konverter mit Zusatzeinrichtungen zum Einbringen von Zuschlägen und/oder fossiler Energie ausgestattet ist.

9. Konverter nach einem oder mehreren der Ansprüche 1 bis 8, dadurch gekennzeichnet, daß die Graphit-Elektroden (11) außerhalb der Längsmittelachse (8) des Konverters und auch außerhalb des an den Konvertermund (6) anschließbaren Abgaskamins (5) angeordnet sind.

10. Verfahren zum Herstellen von Stahl aus Roheisen und/oder Schrott und/oder Eisenschwamm unter Verwendung eines Konverters nach einem oder mehreren der Ansprüche 1 bis 9, dadurch gekennzeichnet, daß unter Zugrundelegung der Konvertertechnologie ein Frischen mit Sauerstoff oder einem sauerstoffhältigen Gas und ein Einbringen von elektrisch erzeugter Wärme durch Brennen eines Lichtbogens an mindestens einer selbstverzehrenden Graphit-Elektrode (11) erfolgt.

11. Verfahren nach Anspruch 10, dadurch gekennzeichnet, daß in einem ersten Verfahrensschritt ein Hauptfrischen von Roheisen und gegebenenfalls einer Teilmenge Schrott und/oder Eisenschwamm durchgeführt wird und anschließend in einem zweiten Verfahrensschritt zusätzlich eingebrachter Schrott und/oder Eisenschwamm geschmolzen und gegebenenfalls gleichzeitig oder in einem dritten Verfahrensschritt gefrischt wird, wobei beim ersten Verfahrensschritt lediglich die Frischeinrichtung (9, 17) aktiv ist und in weiteren Verfahrensschritten sowohl die Frischeinrichtung (9, 17) als auch mindestens eine Graphit-Elektrode (11) aktiviert sind, u.zw. im Falle des Aufblasens von Sauerstoff alternierend und im Falle des Einblasens von Sauerstoff von unterhalb des Schmelzenbadspiegels alternierend oder gleichzeitig.

12. Verfahren nach Anspruch 10, dadurch gekennzeichnet, daß von Anfang an sowohl die Graphit-Elektroden (11) als auch die Frischeinrichtung (9, 17) aktiviert werden, wobei zum im Konverter bereits vorhandenen Roheisen kontinuierlich und/oder chargenweise Schrott und/oder Eisenschwamm zugegeben werden.
